# EUROPEAN PATENT APPLICATION

(11) **EP 4 588 341 A1**
(43) Date of publication of application: **23.07.2025**
(21) Application number: 23865168.1
(22) Date of filing: 16.08.2023
(51) Int. Cl.: A01K 1/015, B01J 20/28, B01J 20/30

(54) **EXCREMENT TREATMENT MATERIAL AND PRODUCTION METHOD FOR SAME**

(30) Priority: 13.09.2022 JP 2022144959
(71) Applicant: Daiki Co., Ltd., Tokyo 102-0072 (JP)
(72) Inventor: YOSHINAGA, Junji, Tokyo 1020072 (JP)
(74) Representative: Müller-Boré & Partner Patentanwälte PartG mbB
(86) International application number: PCT/JP2023/029588
(87) International publication number: WO 2024/057809

(57) **Abstract**

Provided are an excrement treatment material capable of moisturizing an animal skin during excretion, and a method for manufacturing the same. An excrement treatment material (1) includes a grain (10) for treating excrement of an animal. The grain (10) contains a moisturizing component that moisturizes a skin of the animal.

## Description

### Technical Field

The present invention relates to an excrement treatment material for animals and a method for manufacturing the same.

### Background Art

A conventional excrement treatment material is disclosed, for example, in Patent Document 1. The excrement treatment material disclosed in Patent Document 1 is an excrement treatment material for animals, and composed of a plurality of grains that have a water absorbing property. This excrement treatment material is used in a state in which the plurality of grains are laid in a box-shaped toilet. In this toilet, an animal excretes in a state of getting directly on the grains.

### Citation List

### Patent Document

Patent Document 1: JP 2015-97996 A

### Summary of Invention

### Technical Problem

Incidentally, moisturizing a skin is important not only for humans but also for animals. It would be convenient if it was possible to moisturize a skin of an animal when the animal excretes. However, it has not been possible to moisturize an animal skin during excretion in the conventional excrement treatment material naturally.

The present invention has been made in view of the above-described problem, and it is an object thereof to provide an excrement treatment material capable of moisturizing an animal skin during excretion, and a method for manufacturing the same.

### Solution to Problem

An excrement treatment material according to the present invention includes: a grain for treating excrement of an animal, wherein the grain contains a moisturizing component that moisturizes a skin of the animal.

In this excrement treatment material, the grain is provided that contains a moisturizing component that moisturizes an animal skin. For this reason, it becomes possible to attach the moisturizing component to an animal skin when the animal excretes getting on the grain. Thus, the animal skin can be moisturized.

A method for manufacturing an excrement treatment material according to the present invention includes: a grain forming step of forming a grain for treating excrement of an animal, wherein in the grain forming step, the grain is formed that contains a moisturizing component that moisturizes a skin of the animal.

In this manufacturing method, the grain is formed that contains a moisturizing component that moisturizes an animal skin. For this reason, it becomes possible to attach the moisturizing component to an animal skin when the animal excretes getting on the grain in the manufactured excrement treatment material. Thus, the animal skin can be moisturized.

### Advantageous Effects of Invention

According to the present invention, it is possible to implement an excrement treatment material capable of moisturizing an animal skin during excretion, and a method for manufacturing the same.

### Brief Description of Drawings

FIG. 1 is a schematic view showing an embodiment of an excrement treatment material according to the present invention.
FIG. 2 is a schematic view showing a grain 10.

### Description of Embodiments

Hereinafter, an embodiment of the present invention will be described in detail with reference to the drawings. In the description of the drawings, the same elements are given the same reference numerals, and a redundant description will be omitted.

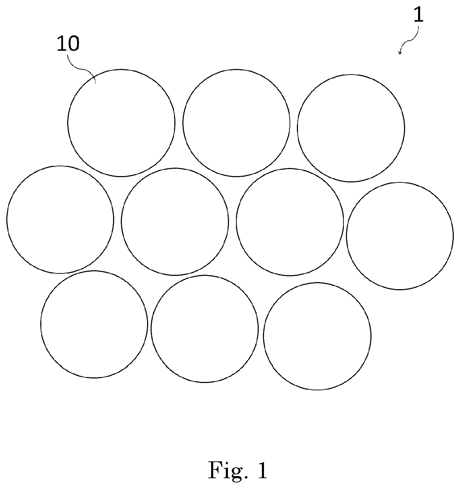

FIG. 1 is a schematic view showing an embodiment of an excrement treatment material according to the present invention. An excrement treatment material 1 is an excrement treatment material for animals that is used for treatment of excrement (mainly urine) of animals such as cats or dogs. The excrement treatment material 1 includes a plurality of grains 10 for treating excrement of an animal. The excrement treatment material 1 is used, for example, in a state in which the plurality of grains 10 are laid in a box-shaped toilet.

Each grain 10 has a water absorbing property. That is, each grain 10 treats excrement by absorbing the excrement. The grains 10 having the water absorbing property require a liquid passing rate of less than 60 % measured by the following test. First, approximate 50 grams of the grains 10 (sample) are placed in a sieve with the inner diameter of 10 cm and the mesh size of 1 mm. An empty beaker is set under the sieve. Then, 30 ml of water is dripped on the sample over 10 seconds using a syringe with the inner diameter of its outer cylinder of 3 cm and the inner diameter of its cylinder tip of 4 mm (60 ml syringe manufactured by Terumo Corp.). After waiting 1 minute, the quantity of the water in the beaker is measured. The ratio of the measured water quantity with respect to the quantity of the dripped water (30 ml) shall be the liquid passing rate. That is, if the water quantity in the beaker is less than 18 ml, the liquid passing rate is less than 60 %, and therefore the grains 10 are found to have the water absorbing property.

Each grain 10 has a granular shape. Examples of the granular shape include a sphere, column, and ellipsoid. The particle diameter of each grain 10 is, for example, between 5 mm and 20 mm inclusive. As used herein, the particle diameter of the grain 10 is defined as the diameter of the minimum sphere that can include the grain 10.

Each grain 10 contains a moisturizing component that moisturizes a skin of the animal. The moisturizing component is preferably a natural component. Examples of the moisturizing component include jojoba oil, shea butter, coconut oil, plant squalane, beeswax, linseed oil, olive oil, camellia oil, sunflower oil, aloe vera, collagen, and natural glycerin. The weight ratio of the moisturizing component with respect to each grain 10 is, for example, between 3 % and 15 % inclusive. The moisturizing component is preferably exposed on the surface of each grain 10. In that case, it is sufficient that at least a part of the moisturizing component is exposed on the surface of the grain 10.

Each grain 10 contains an organic substance other than the moisturizing component as its main material. As used herein, the main material of the grain 10 refers to one of the material(s) constituting the grain 10 that accounts for the highest weight ratio in the grain 10. Examples of the organic substance that is the main material of the grain 10 include papers, plants, plastics, and organic sludge. Each grain 10 is preferably made only of an organic substance (including the moisturizing component).

The papers refer to a material made mainly of pulp. As the papers, in addition to ordinary paper (paper powder), for example, fluff pulp, paper derived from vinyl chloride wallpaper (paper generated during manufacturing or classifying vinyl chloride wallpaper), paper derived from a gypsum board (paper generated during manufacturing or classifying a gypsum board), or paper derived from a sanitary article (paper generated during manufacturing or classifying a sanitary article that contains paper) can be used. Examples of the sanitary article containing paper include paper diapers, sanitary napkins, urine absorbing pads, and sanitary paper (tissue paper, toilet paper, paper towels, or the like). As the plants, for example, wood powder, sawdust, or a plant residue (used tea leaves, bean curd lees, or the like) can be used. As the plastics, in addition to ordinary plastic, for example, plastic derived from vinyl chloride wallpaper (plastic generated during manufacturing or classifying vinyl chloride wallpaper), or plastic derived from a sanitary article (plastic generated during manufacturing or classifying a sanitary article that contains plastic) can be used. Examples of the sanitary article containing plastic include paper diapers, sanitary napkins, urine absorbing pads, and sanitary masks. As the organic sludge, for example, papermaking sludge, or pulp sludge can be used.

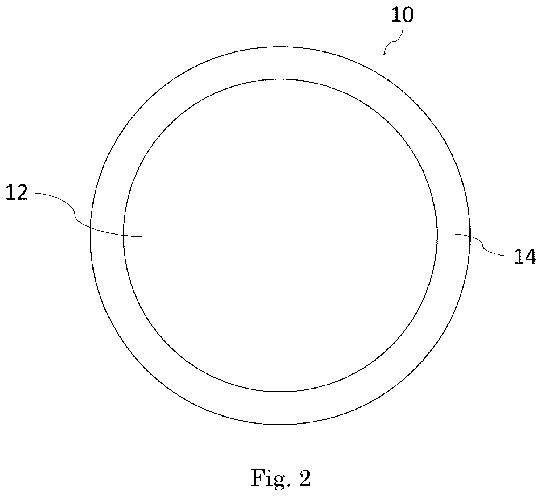

FIG. 2 is a schematic view showing the grain 10. Each grain 10 is composed of a plurality of layers. Specifically, each grain 10 includes a core portion 12 (first layer), and a coating portion 14 (second layer). The core portion 12 is a granule formed in a granular shape. The core portion 12 has a function of absorbing and retaining excrement. The core portion 12 contains an organic substance other than the moisturizing component as its main material. As used herein, the main material of the core portion 12 refers to one of the material(s) constituting the core portion 12 (core portion material) that accounts for the highest weight ratio in the core portion 12. The core portion 12 may or may not contain an adhesive material. Examples of the adhesive material include a water-absorbent polymer, starch, CMC (carboxymethyl cellulose), PVA (polyvinyl alcohol), and dextrin. As the water-absorbent polymer, for example, an acrylic water-absorbent polymer such as sodium polyacrylate can be used.

The coating portion 14 covers the core portion 12. That is, the coating portion 14 is provided outside the core portion 12. In the present embodiment, the coating portion 14 is the layer (outermost layer) that is located outermost out of the plurality of layers constituting each grain 10. The coating portion 14 may cover the entire surface of each core portion 12, or may cover only a part of the surface of each core portion 12. The coating portion 14 has a function (agglomeration forming function) of bonding the grains 10 that have absorbed excrement to agglomerate them when in use. The coating portion 14 contains an adhesive material. The coating portion 14 also contains an organic substance other than the moisturizing component as its main material. As used herein, the main material of the coating portion 14 refers to one of the material(s) constituting the coating portion 14 (coating material) that accounts for the highest weight ratio in the coating portion 14. In the present embodiment, the moisturizing component is contained in both the core portion 12 and the coating portion 14. However, the weight ratio of the moisturizing component with respect to the coating portion 14 is preferably larger than the weight ratio of the moisturizing component with respect to the core portion 12.

Next, an example of a method for manufacturing the excrement treatment material 1 will be described as an embodiment of a method for manufacturing an excrement treatment material according to the present invention. This manufacturing method includes a grain forming step.

The grain forming step is a step of forming the grain 10. The grain forming step includes a core portion forming step, and a coating portion forming step. The core portion forming step is a step of forming the core portion 12. In the core portion forming step, a plurality of granules that will serve as the core portions 12 are formed by granulating the core portion material containing the moisturizing component with a granulation apparatus. As the granulation apparatus, for example, an extrusion granulator can be used. Prior to the granulation, pretreatment such as pulverization, kneading, and adding water is performed on the core portion material as needed.

The coating portion forming step is a step of forming the coating portion 14. In the coating portion forming step, the coating portion 14 is formed by attaching the coating material containing the moisturizing component to the surface of each core portion 12 with a coating apparatus or the like. The coating material can be attached by, for example, sprinkling or spraying. After that, posttreatment such as sieving (sizing), and drying is performed as needed. Accordingly, the excrement treatment material 1 composed of the plurality of grains 10 is obtained.

The effects of the present embodiment will be described. In the present embodiment, the grain 10 is formed that contains a moisturizing component that moisturizes an animal skin. For this reason, it becomes possible to attach the moisturizing component to an animal skin (especially foot sole) when the animal excretes getting on the grain 10 in the excrement treatment material 1. Thus, the animal skin can be moisturized. Accordingly, the excrement treatment material 1 capable of moisturizing an animal skin during excretion, and the method for manufacturing the same are implemented.

In a case of animals that have pads on their foot soles, such as cats or dogs, because the pads come in direct contact with the grain 10 during excretion, the pads can be effectively moisturized. Moreover, in the case of cats, since they have the habit of sprinkling the grains 10 on excrement using their feet, the moisturizing component is likely to be attached to the feet. Therefore, the excrement treatment material 1 is particularly suitable as an excrement treatment material for cats.

In the case where the moisturizing component is exposed on the surface of the grain 10, there is an advantage that the moisturizing component can be easily attached to an animal skin. However, even in a case where the moisturizing component is not exposed on the surface of the grain 10, it is possible to attach the moisturizing component to an animal skin due to the moisturizing component exuding from the inside of the grain 10 that has absorbed urine.

In the case where the moisturizing component is a natural component, even if an animal puts the moisturizing component into its mouth, for example, by licking the grain 10, it is possible to reduce a risk of damaging health of the animal.

The grain 10 is composed of the plurality of layers. In this case, different functions can be assigned to the layers. For example, in the present embodiment, the water absorption and retention function is assigned mainly to the core portion 12, and the agglomeration forming function is assigned to the coating portion 14.

The moisturizing component contained in the coating portion 14, which is the relatively outer layer, is more likely to be attached to an animal skin, than the moisturizing component contained in the core portion 12, which is the relatively inner layer. Therefore, the moisturizing component can be efficiently attached to an animal skin by making the weight ratio of the moisturizing component with respect to the coating portion 14 larger than the weight ratio of the moisturizing component with respect to the core portion 12.

The grain 10 contains an organic substance as its main material. Thus, it is possible to obtain the grain 10 suitable for being disposed of by incineration. This contributes to convenience of disposal of the grain 10 after use. Particularly in the case where each grain 10 is made only of an organic substance, it is possible to obtain the grain 10 more suitable for being disposed of by incineration.

The present invention is not limited to the above-described embodiment, and various modifications can be made. In the above-described embodiment, an example is given in which the moisturizing component is contained in both the core portion 12 and the coating portion 14. However, the moisturizing component may be contained only in the coating portion 14, out of the core portion 12 and the coating portion 14. In that case, the moisturizing component can be more efficiently attached to an animal skin.

In the above-described embodiment, an example is given in which the outermost layer (coating portion 14) of the plurality of layers constituting the grain 10 contains an organic substance other than the moisturizing component, and an adhesive material in addition to the moisturizing component. However, the outermost layer may be made only of the moisturizing component. In that case, the outermost layer can be formed by attaching the moisturizing component to the surface of the second outermost layer (core portion 12 in the case of the above-described embodiment) of the plurality of layers constituting the grain 10. The moisturizing component can be attached by, for example, sprinkling or spraying. The outermost layer may be provided entirely or partially. That is, the outermost layer may be formed so as to cover the entire surface of the second outermost layer, or may be formed so as to cover only a part of the surface.

In the case where the outermost layer is made only of the moisturizing component in this way, the moisturizing component can be surely exposed on the surface of the grain 10. Moreover, in the case where the outermost layer made only of the moisturizing component is provided partially, excrement can be speedily taken into the inside of the grain 10 through the part on which the outermost layer is not provided.

In the above-described embodiment, an example is given in which the grain 10 has double-layer structure composed of the core portion 12 and the coating portion 14. However, the grain 10 may have multi-layer structure composed of three or more layers. Alternatively, the grain 10 may have single-layer structure composed only of an uncovered granule (core portion 12).

In the above-described embodiment, an example is given in which the grain 10 has a water absorbing property. However, the grain 10 may have a hydrophobic property. The grains 10 having the hydrophobic property require the liquid passing rate of 60 % or more measured by the test described above. In the case where the hydrophobic grain 10 is used, excrement passes through gaps between the grains 10. In this case, it is possible to restrain a malodor generated from excrement from leaking outside through the top part of a toilet by guiding the excrement downward in the toilet.

### List of Reference Numerals

- 1: Excrement Treatment Material
- 10: Grain
- 12: Core Portion
- 14: Coating Portion

## Claims

1. An excrement treatment material comprising:
a grain for treating excrement of an animal,
wherein the grain contains a moisturizing component that moisturizes a skin of the animal.

2. The excrement treatment material according to claim 1,
wherein the moisturizing component is exposed on a surface of the grain.

3. The excrement treatment material according to claim 1 or 2,
wherein the moisturizing component is a natural component.

4. The excrement treatment material according to claim 1 or 2,
wherein the grain is composed of a plurality of layers.

5. The excrement treatment material according to claim 4,
wherein the plurality of layers include a first layer that contains the moisturizing component, and a second layer that is provided outside the first layer and contains the moisturizing component, and
a weight ratio of the moisturizing component with respect to the second layer is larger than a weight ratio of the moisturizing component with respect to the first layer.

6. The excrement treatment material according to claim 4,
wherein the moisturizing component is contained only in an outermost layer out of the plurality of layers.

7. The excrement treatment material according to claim 4,
wherein an outermost layer of the plurality of layers is made only of the moisturizing component.

8. The excrement treatment material according to claim 7,
wherein the outermost layer is provided partially.

9. The excrement treatment material according to claim 1 or 2,
wherein the grain has a hydrophobic property.

10. The excrement treatment material according to claim 1 or 2,
wherein the grain contains an organic substance as a main material.

11. The excrement treatment material according to claim 10,
wherein the grain is made only of an organic substance.

12. The excrement treatment material according to claim 1 or 2,
wherein the animal is a cat.

13. A method for manufacturing an excrement treatment material, the method comprising:
a grain forming step of forming a grain for treating excrement of an animal,
wherein in the grain forming step, the grain is formed that contains a moisturizing component that moisturizes a skin of the animal.

14. The method for manufacturing an excrement treatment material according to claim 13,
wherein in the grain forming step, the grain is formed such that the moisturizing component is exposed on a surface of the grain.

15. The method for manufacturing an excrement treatment material according to claim 13 or 14,
wherein the moisturizing component is a natural component.

16. The method for manufacturing an excrement treatment material according to claim 13 or 14,
wherein in the grain forming step, the grain is formed that is composed of a plurality of layers.

17. The method for manufacturing an excrement treatment material according to claim 16,
wherein the plurality of layers include a first layer that contains the moisturizing component, and a second layer that is provided outside the first layer and contains the moisturizing component, and
in the grain forming step, the grain is formed such that a weight ratio of the moisturizing component with respect to the second layer is larger than a weight ratio of the moisturizing component with respect to the first layer.

18. The method for manufacturing an excrement treatment material according to claim 16,
wherein in the grain forming step, the grain is formed such that the moisturizing component is contained only in an outermost layer out of the plurality of layers.

19. The method for manufacturing an excrement treatment material according to claim 16,
wherein an outermost layer of the plurality of layers is made only of the moisturizing component.

20. The method for manufacturing an excrement treatment material according to claim 19,
wherein the outermost layer is formed partially.

21. The method for manufacturing an excrement treatment material according to claim 13 or 14,
wherein in the grain forming step, the grain is formed that has a hydrophobic property.

22. The method for manufacturing an excrement treatment material according to claim 13 or 14,
wherein in the grain forming step, the grain is formed that contains an organic substance as a main material.

23. The method for manufacturing an excrement treatment material according to claim 22,
wherein in the grain forming step, the grain is formed that is made only of an organic substance.

24. The method for manufacturing an excrement treatment material according to claim 13 or 14,
wherein the animal is a cat.
